# EUROPÄISCHE PATENTSCHRIFT

(11) **EP 1 937 943 B1**
(45) Veröffentlichungstag und Bekanntmachung des Hinweises auf die Patenterteilung: **31.10.2018**
(21) Anmeldenummer: 06793719.3
(22) Anmeldetag: 21.09.2006
(51) Int. Cl.: F01K 23/10, G07C 3/00, F01K 13/00

(54) **VERFAHREN UND VORRICHTUNG ZUR BESTIMMUNG DES LEBENSDAUERVERBRAUCHS EINZELNER BAUTEILE EINER FOSSIL BEFEUERTEN ENERGIEERZEUGUNGSANLAGE, INSBESONDERE EINER GUD-ANLAGE**
METHOD AND DEVICE FOR DETERMINING THE REDUCTION OF LIFETIME OF INDIVIDUAL COMPONENTS OF A FOSSIL-FUELLED POWER PLANT, PARTICULARLY OF A STEAM AND GAS TURBINE SYSTEM
PROCÉDÉ ET DISPOSITIF POUR DETERMINER LA RÉDUCTION DE DURÉE DE VIE DE COMPOSANTS INDIVIDUELS D'UNE INSTALLATION POUR LA PRODUCTION D'ÉNERGIE ALIMENTÉE PAR MATIÈRE FOSSILE, PARTICULIÈREMENT D'UN CYCLE COMBINÉ AVEC TURBINES

(30) Priorität: 17.10.2005 EP 05022572
(43) Veröffentlichungstag der Anmeldung: 02.07.2008
(73) Patentinhaber: Siemens Aktiengesellschaft, 80333 München (DE)
(72) Erfinder: GOBRECHT, Edwin, 40885 Ratingen (DE); NEWALD, Rainer, 91052 Erlangen (DE); WINDECKER, Eva, 91054 Erlangen (DE)
(86) Internationale Anmeldenummer: PCT/EP2006/066599
(87) Internationale Veröffentlichungsnummer: WO 2007/045537

(56) Entgegenhaltungen:
- EP-A- 1 431 927
- DE-A1- 4 424 743
- US-A- 5 410 883
- LAIRE CH ET AL: "EVALUATING THE CONDITION AND REMAINING LIFE OF OLDER POWER PLANTS EVALUIERUNG DES ZUSTANDS UND DER RESTIEBENSDAUER AELTERER KRAFTWERKE" VGB POWERTECH, VGB POWERTECH, ESSEN, DE, Bd. 81, Nr. 10, 2001, Seiten 98-102, XP001081260 ISSN: 1435-3199

## Beschreibung

Die Erfindung betrifft ein Verfahren zur Vorausbestimmung des Lebensdauerverbrauchs einzelner Bauteile einer fossil befeuerten Energieerzeugungsanlage im Hinblick auf einen durchzuführenden Lastwechselvorgang. Weiterhin betrifft die Erfindung ein Verfahren zur Vorausbestimmung der erwarteten Lastwechselzeit in einer fossil befeuerten Energieerzeugungsanlage. Weiterhin betrifft die Erfindung eine Vorrichtung zur Vorausbestimmung des Lebensdauerverbrauchs einzelner Bauteile einer fossil befeuerten Energieerzeugungsanlage im Hinblick auf einen durchzuführenden Lastwechselvorgang und zur Vorausbestimmung der erwarteten Lastwechselzeit in einer fossil befeuerten Energieerzeugungsanlage.

In einer Gasturbinenanlage wird ein gasförmiger oder flüssiger Brennstoff, beispielsweise Erdgas oder Erdöl, mit verdichteter Luft vermischt und verbrannt. Die unter Druck stehenden Verbrennungsabgase werden der Turbine der Gasturbinenanlage als Arbeitsmedium zugeführt. Das Arbeitsmedium versetzt die Turbine unter Entspannung in Rotation, wobei thermische Energie in mechanische Arbeit, nämlich die Rotation der Turbinenwelle, umgewandelt wird. Beim Austritt des entspannten Arbeitsmediums aus der Gasturbinenanlage weist dieses typischerweise noch eine Temperatur von 500 - 600 ° Celsius auf.

In einer Gas- und Dampfturbinenanlage (GuD-Anlage) wird das entspannte Arbeitsmedium, auch Rauchgas genannt, aus der Gasturbinenanlage dazu genutzt, Dampf zum Antreiben einer Dampfturbine zu erzeugen. Dazu wird das Arbeitsmedium einem der Gasturbinenanlage abgasseitig nachgeschalteten Abhitzedampferzeuger zugeführt, in dem Heizflächen in Form von Rohren oder Rohrbündeln angeordnet sind. Die Heizflächen sind wiederum in einen Wasser-Dampf-Kreislauf der Dampfturbinenanlage geschaltet, welcher mindestens eine zumeist jedoch mehrere Druckstufen aufweist.

Zum Starten einer Gas- und Dampfturbinenanlage wird derzeit üblicherweise die Gasturbinenanlage gestartet und das entspannte Arbeitsmedium dem Abhitzedampferzeuger der Dampfturbinenanlage zugeführt. Der im Abhitzedampferzeuger erzeugte Dampf wird jedoch zunächst nicht dem Turbinenteil der Dampfturbinenanlage zugeführt sondern wird über Umleitstationen an der Turbine vorbeiführt und direkt einem Kondensator zugeführt, welcher den Dampf zu Wasser kondensiert. Erst dann, wenn bestimmte Dampfparameter in den Dampfleitungen des Wasser-Dampfkreislaufes beziehungsweise in den zu dem Turbinenteil der Gasturbinenanlage führenden Dampfleitungen, beispielsweise bestimmte Dampfdrücke und -temperaturen, eingehalten sind, wird die Dampfturbine zugeschaltet. Das Einhalten dieser Dampfparameter soll mögliche Spannungen in dickwandigen Bauteilen auf einem niedrigen Niveau halten. Nach dem Anfahren der Gasturbinenanlage erfolgt ein Leistungsanstieg, der zu einem Druckanstieg im Dampfsystem führt. Maßgeblich für den Lastgradienten, mit dem die Gasturbinenanlage angefahren wird, das heißt die Leiststeigerung der Gasturbinenanlage pro Zeiteinheit, hängt maßgeblich von der Ausführung und der Konstruktionsweise des Abhitzedampferzeugers sowie den konstruktiven Limitierungen innerhalb der Dampfturbine ab. Mit Ansteigen der Gasturbinenlast und damit der Temperatur bzw. des Volumenstroms des von der Gasturbinenanlage abgegeben Abgases werden auch die Dampftemperatur und der Druck im Dampfsystem erhöht.

Der Auslegung von fossil befeuerten Kraftwerksanlagen, beispielsweise einer GuD-Anlage liegt unter anderem ein zu erwartendes Lastkollektiv zu Grunde. Die Laständerungs-Geschwindigkeiten, beispielsweise der An- und Abfahrvorgang oder aber einzelne Lastwechsel, werden bei der Auslegung so gewählt, dass am Ende der geplanten Lebensdauer der Kraftwerksanlage die theoretische Bauteillebensdauer vollständig ausgenutzt wurde. Durch Lebensdauer-Überwachungssysteme kann der tatsächliche, aktuelle Lebensdauerverbrauch angezeigt werden.

Durch eine fortschreitende Liberalisierung der Strommärkte stellt sich der Anspruch eine fossil befeuerte Kraftwerksanlage möglichst hinsichtlich schneller Anfahrzeit anzufahren bzw. unter den gleichen Aspekten mit einer fossil befeuerten Kraftwerksanlage Lastwechsel zu fahren. Nach dem heutigem Stand der Technik werden in einem fossil befeuerten Kraftwerk Laständerungen nach bestimmten zulässigen Grenzen z.B. besonders spannungskritischer Bestandteile der Anlage wie beispielsweise Kessel, Dampfturbine oder Gasturbine gefahren, die durch die Auslegung ihrer einzelnen Bauteile bestimmt sind. Diese werden entweder als starre Grenzen in einem Automatisierungssystem hinterlegt oder über ein Optimierungssystem zeitgleich berechnet. Ein Beispiel hierfür ist die Berechnung der optimalen Kesselgrenzen für befeuerte Kessel. Diese Optimierungssysteme geben jedoch keine Informationen vor dem Lastwechsel und lassen auch somit keine aktive Beeinflussung z.B. der Zeit oder des Lebensdauerverbrauches in Abhängigkeit von den Marktanforderungen zu.

Durch das Anpassen der Laständerungs-Geschwindigkeiten an die jeweils aktuellen Marktanforderungen wird der Lebensdauerverbrauch einzelner Bauteile jedoch im hohen Maß bewusst beeinflusst. Daher stellt sich der Anspruch nach möglichst geringem Lebensdauerverbrauch der einzelnen Bauteile bei den vorgenommenen Lastwechseln. Dies kann die Flexibilität einer fossil befeuerten Kraftwerksanlage beim Anfahren und bei Lastwechseln beträchtlich erhöhen und zum Kundennutzen beitragen, was gerade in einem liberalisierten Strommarkt der Wettbewerbsfähigkeit einer solchen Anlage zugute kommt.

Dies ist beispielsweise in der EP 0 937 194 B1 für eine Dampfturbine gezeigt. In der EP 0 937 194 B1 wird unter Eingabe einer Zeitvorgabe eine Turbinenleiteinrichtung zur Regelung eines Lastwechselvorgangs einer Turbine angegeben, durch die unter Berücksichtigung einer maximal zulässigen Materialbeanspruchung eine flexible, den betrieblichen Anforderungen zur Erzeugung elektrischer Energie entsprechende Änderung der Betriebsbedingungen der Turbine erreicht wird. Für die Regelung des Lastwechselvorgangs wird in der EP 0 937 194 B1 unter Vorgabe der Zeitdauer eine Turbinenleitgröße in der Begrenzungseinheit bestimmt, die als Funktion der Zeit in der Zeitdauer zwischen Verlassen des Anfangszustandes und Erreichen des Zielzustandes ermittelt wird.

Zudem wird die Materialerschöpfung des entsprechend der Turbinenleitgröße durchzuführenden Lastwechselvorgangs ermittelt. Somit kann die zusätzliche Materialerschöpfung vorab berechnen werden, so dass anhand dieser Materialerschöpfung und der noch gewünschten Betriebsdauer der Turbine manuell oder automatisch entschieden werden kann, ob der Lastwechselvorgang tatsächlich in der gewünschten Zeitdauer durchgeführt werden soll.

In der EP A 1431927 ist ein Verfahren zur Schätzung der Restlebensdauer eine Vorrichtung offenbart die während des Betriebs einem Verschleiß unterliegt, wie beispielsweise Turbinen oder Strahltriebwerke von Flugzeugen. Dabei wird zunächst für mindestens einen charakteristischen Parameter, der sensitiv für den Verschleiss ist, ein Zusammenhang mit einer Zeitgrösse ermittelt, welche repräsentativ für die Betriebsdauer ist. Dann wird für den charakteristischen Parameter ein Grenzwert festgelegt, der den maximal zulässigen Verschleiss angibt. Daraus wird ein Kennfeld erstellt, das einen Zusammenhang zwischen dem charakteristischen Parameter, der Zeitgrösse und dem Verschleiss angibt. Mit Hilfe messtechnisch erfasster Daten werden daraufhin Ist-Werte für den charakteristischen Parameter in Abhängigkeit von der Zeitgrösse ermittelt, für die jeweils anhand des Kennfelds der momentan vorhandene Verschleiss ermittelt wird. Ausgehend von dem momentanen Ist-Wert des charakteristischen Parameters wird mittels Extrapolation auf den Grenzwert bestimmt, für welchen Endwert der Zeitgrösse der maximal zulässige Verschleiss erreicht wird. Durch Vergleich dieses Endwerts mit dem Wert für die Zeitgrösse, der zu dem momentan vorhandenen Verschleiss gehört, wird die Restlebensdauer geschätzt.

In dem Artikel von Lair CH ET AL "Evaluating the condition and remaining life of older Power Plants; VGB Power Tech Belgien; Nr. 10 (ISSN: 1435-3199) wird die Evaluierung des Zustands und der Restlebensdauer älterer Kraftwerke beschrieben. Dabei wird mit risikobasierten Inspektionsmethoden und Methode zur Risikobewertung das optimale Inspektionsintervall für alle Elemente des Prozesses ermittelt werden, die für den schleichenden Qualitätsverlust von Werkstoffen anfällig sind. Die Anlagen Komponenten die nicht von schleichenden Qualitätsverlusten betroffen sind, können nur durch Änderung der Konstruktion, Wartung oder Betriebsbedingungen verbessert werden.

Die DE 44 24 743 A1 offenbart ein Verfahren und eine Vorrichtung zur Diagnose und Prognose des Betriebsverhaltens einer Turbinenanlage. Um beim Betrieb einer derartigen Turbinenanlage eine Abweichung des aktuellen Betriebszustands von einem Idealzustand festzustellen, und um die Reaktion der Turbinenanlage auf sich ändernde Randbedingungen zu prognostizieren, wird bei Vorgabe eines Betriebsparameters mittels eines aus anlagenspezifischen Kenngrößen ermittelnden Anlagenmodells mindestens ein weiterer Betriebsparameter ermittelt. Zur Berechnung einzelner Betriebsparameter anhand des Anlagenmodells ist dabei ein Rechnerbaustein der auf einen Modellspeicher für das Anlagenmodell zugreift, umfasst.

In der US A 5 410 883 wird ebenso ein Verfahren für thermische Kraftwerksanlagen offenbart, welches anhand des Lebensdauerverbrauchs einzelner Apparate und der gesamten Kraftwerksanlage eine sinnvolle Betriebsweise der Kraftwerksanlage wählt.

Die Aufgabe der Erfindung ist die Angabe eines weiter verbesserten Verfahrens zur Erhöhung der Flexibilität, insbesondere der Betriebsflexibilität, einer fossil befeuerten Energieerzeugungsanlage, beispielsweise einer GuD-Anlage. Eine weitere Aufgabe ist die Angabe eines alternativen Verfahrens. Eine zusätzliche Aufgabe ist die Angabe einer Vorrichtung zur Erhöhung der Flexibilität einer fossil befeuerten Energieerzeugungsanlage. Die Vorrichtung soll sich insbesondere zur Durchführung des Verfahrens und des alternativen Verfahrens eignen.

Die auf das Verfahren bezogene Aufgabe wird erfindungsgemäß gelöst durch die Angabe eines Verfahrens zur Vorausbestimmung des Lebensdauerverbrauchs einzelner Bauteile einer fossil befeuerten Energieerzeugungsanlage im Hinblick auf einen durchzuführenden Lastwechselvorgang, wobei vor dem Lastwechselvorgang aktuelle den Zustand der Energieerzeugungsanlage charakterisierende Größen bestimmt werden, wobei eine den Lastwechselvorgang realisierende Fahrstufe der Energieerzeugungsanlage vorab eingestellt wird, wobei mittels der Fahrstufe und den charakterisierenden Größen die Lastwechselzeit berechnet wird, und wobei ein prognostizierter Lebensdauerverbrauch für wenigstens einen Teil der einzelnen Bauteile für die eingestellte Fahrstufe berechnet wird.

Der Erfindung liegt die Kenntnis zugrunde, dass im Hinblick auf die gesteigerten Anforderungen, beispielsweise die Leistungsanforderungen des Lastverteilers, die hohen Brennstoffkosten oder die Stromerlöserpreise, welche ein liberalisierter Strommarkt mit sich bringt, nicht nur die Anlagenfahrweise einer fossil befeuerten Energieerzeugungsanlage, sondern auch der Lebensdauerverbrauch gerade bei Lastwechsel zu berücksichtigen ist. Weiter liegt hier die Erkenntnis zugrunde, dass der Lebensdauerverbrauch eines Bauteils bei einem Lastwechsel wesentlich von dem die Anlage bestimmenden aktuellen Zustand abhängt, das heißt von dem momentanen Zustand in dem die Anlage und die darin befindlichen Bauteile sind. Bei einer fossil befeuerten Energieerzeugungsanlage werden daher zur Vorausbestimmung des Lebensdauerverbrauchs einzelner Bauteile im Hinblick auf einen durchzuführenden Lastwechselvorgang, die den Zustand charakterisierende Größen, beispielsweise Bauteiltemperatur und Systemdruck vor diesem Lastwechsel abgegriffen. Diese charakterisierenden Größen sind z.B. abhängig vom Auskühlzustand der Energieerzeugungsanlage während des Stillstands bzw. vom aktuellen Betriebszustand der Energieerzeugungsanlage unmittelbar vor dem Lastwechsel. Nach Bestimmung der charakterisierenden Größen wird eine den Lastwechselvorgang realisierende Fahrstufe der Energieerzeugungsanlage vorab eingestellt. Diese Fahrstufe kann beispielsweise die Stufen langsamer, normaler oder schneller Lastwechsel sowie den Zielwert d.h. den Leistungssollwert der Anlage in Bezug auf die Stromabgabe umfassen. Es ist jedoch auch eine andere Fahrstufe denkbar, die jedoch innerhalb zulässiger Toleranzen liegen sollte. Nach Einstellen der Fahrstufe und Bestimmen der charakterisierenden Größen wird beispielsweise durch Simulation die Lastwechselzeit berechnet. Mit Hilfe dieser Daten wird nun ein prognostizierter Lebensdauerverbrauch für wenigstens einen Teil der einzelnen Bauteile für die eingestellte Fahrstufe berechnet. Die Berechnung kann durch ein Lebensdauer-Überwachungssystem erfolgen. Durch das Verfahren ist es nunmehr möglich den erwarteten Lebensdauerverbrauch einzelner, insbesondere spannungskritischer Bauteile bereits vor dem Lastwechsel zu bestimmen und die Fahrstufe daraufhin abzustimmen. Somit ist eine Anpassung der fossil befeuerten Energieerzeugungsanlage an die gesteigerten Anforderungen möglich. Durch die erhöhte Flexibilität der fossil befeuerten Energieerzeugungsanlage vergrößert sich ebenfalls die Wettbewerbsfähigkeit auf einem liberalisierten Strommarkt, zum einen betreiberseitig zum Beispiel durch Anbieten eines billigeren Stroms, da eine monetäre Bewertung des Lastwechsels und eine lebensdauerverbrauchschonende Fahrstufe erkannt wird. Auch Zuliefererseitig wird durch Anbieten einer Energieerzeugungsanlage, die auf das Anforderungsprofil des Kunden zugeschnitten ist, eine Verbesserung erzielt.

Als besonders vorteilhaft erweist sich, dass das Verfahren nicht nur zur Vorausbestimmung des Lebensdauerverbrauchs einzelner Bauteile herangezogen werden kann, sondern auch zur Vorausbestimmung anderer Prozessgrößen wie des erwarteten Brennstoffverbrauchs und/oder der erwarteten Leistungsabgabe während des Lastwechsels verwendet werden kann. Die Vorausbestimmung des Lebensdauerverbrauchs ist damit nur eine mögliche, hier vorzugsweise in Betracht gezogene Prozessgröße. Die Erfindung ermöglicht und umfasst auch Verfahren zur Vorausbestimmung und Berücksichtigung dieser anderen genannten Prozessgrößen, alternativ oder zusätzlich zum Lebensdauerverbrauch.

Alternativ wird in vorteilhafter Ausgestaltung anstelle der eingestellten Fahrstufe eine gewünschte Lastwechselzeit und eine gewünschte Zielleistung, das heißt Leistungssollwert eingegeben. Damit wird der prognostizierte Lebensdauerverbrauch für wenigstens einen Teil der einzelnen Bauteile für die eingestellte Zielleistung berechnet. Vorteilhafterweise können hier beispielsweise mittels Simulation unter Berücksichtung der aktuellen den Zustand der Energieerzeugungsanlage charakterisierende Größen die notwendigen Laständerungs-Begrenzungen, welche genau diesen gewünschten Vorgang mit der entsprechenden Zielzeit erreichen, berechnet werden. Die errechneten Laständerungs-Begrenzungen werden gespeichert und können anschließend für neue Berechnungen hinterlegt und verwendet werden.

Die auf das alternative Verfahren bezogene Aufgabe wird erfindungsgemäß gelöst durch die Angabe eines alternativen Verfahrens zur Vorausbestimmung der erwarteten Lastwechselzeit in einer fossil befeuerten Energieerzeugungsanlage, wobei vor dem Lastwechselvorgang aktuelle, den Zustand der Energieerzeugungsanlage charakterisierende Größen bestimmt werden, und wobei über die Eingabe des gewünschten Lebensdauerverbrauchs der einzelnen Bauteile nach dem Lastwechsel die Fahrstufe und die erwartete Lastwechselzeitberechnet wird.

Ein alternatives Verfahren zur Erhöhung der Flexibilität einer Energieerzeugungsanlage ist über Eingabe eines gewünschten Lebensdauerverbrauches erzielbar. Dabei werden vor dem Lastwechsel aktuelle, den Zustand der Energieerzeugungsanlage charakterisierende Größen bestimmt. Als Ergebnis der Vorausbestimmung ergibt sich die erwartete Anfahrzeit, Abfahr- bzw. Lastwechselzeit. Die errechneten Laständerungs-Begrenzungen werden gespeichert und können anschließend für neue Berechnungen hinterlegt und verwendet werden.

Die auf die Vorrichtung bezogene Aufgabe wird erfindungsgemäß gelöst durch die Angabe einer Vorrichtung zur Vorausbestimmung des Lebensdauerverbrauchs einzelner Bauteile einer fossil befeuerten Energieerzeugungsanlage im Hinblick auf einen durchzuführenden Lastwechselvorgang umfassend eines Automatisierungssystems, einer Rechnereinheit und ein Lebensdauer-Überwachungssystem wobei das Automatisierungssystem zum Datenaustausch mit der Rechnereinheit und die Rechnereinheit zum Datenaustausch mit dem Lebensdauer-Überwachungssystem verbunden sind, so dass eine Berechnung eines prognostizierten Lebensdauerverbrauchs für wenigstens einen Teil der einzelnen Bauteile für die eingestellte Fahrstufe vorgesehen ist. Die Vorrichtung ist insbesondere dafür geeignet, das oben beschriebene Verfahren sowie das alternativ angegebene Verfahren durchzuführen. Die Vorteile des Verfahrens ergeben sich daher auch für die Vorrichtung.

Weitere Merkmale, Eigenschaften und Vorteile der Erfindung ergeben sich aus der Beschreibung eines Ausführungsbeispiels und aus den weiteren abhängigen Ansprüchen.

Im Folgenden wird die Erfindung beispielhaft anhand einer Zeichnung näher erläutert.

Darin zeigt in vereinfachter und nicht maßstäblicher Darstellung:
- FIG 1: eine schematische Darstellung des Verfahrens,
- FIG 2: eine schematische Darstellung des Verfahrens und der Vorrichtung in einer GuD-Anlage.

Gleiche Teile sind in allen Figuren mit denselben Bezugszeichen versehen.

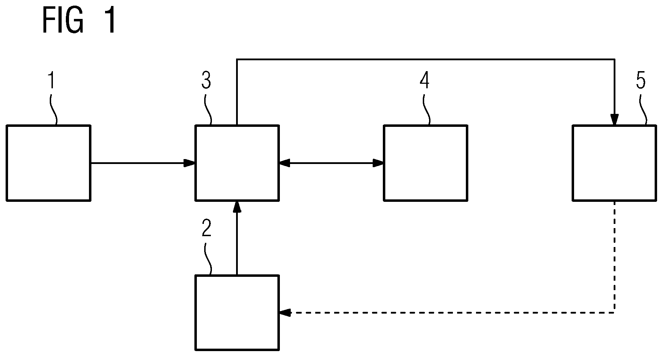

In FIG 1 ist schematisch ein Verfahren zur Vorausbestimmung des Lebensdauerverbrauchs einzelner Bauteile einer fossil befeuerten Energieerzeugungsanlage im Hinblick auf einen durchzuführenden Lastwechselvorgang dargestellt. Dieses umfasst im Wesentlichen ein Automatisierungssystem 1, eine manuelle Eingabeeinheit 2, eine Rechnereinheit 3 ein Lebensdauer-Überwachungssystem 4 und eine Ausgabeeinheit 5.

Das Automatisierungssystem 1 greift bereits vor dem eigentlichen Anfahr/Abfahrvorgang bzw. Lastwechsel die aktuelle, den Zustand der Energieerzeugungsanlage charakterisierende Größen der Anlage ab. Diese charakterisierenden Größen sind abhängig vom Auskühlzustand der Anlage während dem Stillstand bzw. vom aktuellen Betriebszustand der Anlage unmittelbar vor dem Anfahren, Abfahren bzw. vor dem Lastwechsel. Relevante Größen sind dabei beispielsweise die Bauteiltemperaturen und Systemdrücke. Über eine Eingabeeinheit 2 werden eine bestimmte Fahrstufe beispielsweise für langsames, normales oder schnelles Betreiben der Anlage sowie der Zielwert der Leistung eingestellt. Dabei kann diese Einstellung manuell oder automatisch erfolgen. Anschließend kommen diese Daten einer Rechnereinheit 3 zu. Die Rechnereinheit 3 berechnet dabei einerseits Größen wie z.B. Anfahrzeit, Abfahrzeit oder Lastwechselzeit, und simuliert andererseits gleichzeitig die Verläufe verschiedener Parameter über den Anfahr/Abfahr- oder Lastwechselvorgang. Diese Parameter sind z.B. Temperaturverläufe, Druckverläufe und Massenstromverläufe des Kraftwerkprozesses. Mit Hilfe der Daten, die durch das Automatisierungssystem 1 und die Eingabeeinheit 2 an die Rechnereinheit 3 übermittelt werden, berechnet die Rechnereinheit 3 dann beispielsweise die erwartete Anfahr-, Abfahr- bzw. die Lastwechselzeit durch z.B. Simulation des Anfahr-, Abfahr- bzw. Lastwechselvorganges. Dies erfolgt unter Einhaltung der zulässigen Grenzen, z.B. Temperaturanstieg, Druckanstieg etc... welche in der Anlage zu berücksichtigen sind. Dabei steht die Recheneinheit 3 mit dem Lebensdauer-Überwachungssystemen 4 in Kommunikation. Mit den in der Recheneinheit 3 berechneten Ergebnissen wird gleichzeitig nun der erwartete Lebensdauerverbrauch für die einzelnen Bauteile bei durchführen des Lastwechselvorgangs bei eingestellter Fahrstufe berechnet. Dabei zieht das Lebensdauerüberwachungssystemen 4 auch die aktuellen Lebensdauerverbrauchdaten in Betracht. Der Lebensdauerverbrauch der einzelnen Bauteile bei der vorab eingestellten Fahrstufe kann anschließend auf einer Ausgabeeinheit 5 dargestellt werden. Diese kann dann beispielsweise vom Kraftwerksführer gesichtet werden. Anschließend kann dieser manuell entscheiden, ob er die eingestellte Fahrstufe beibehalten will oder ob er eine andere Fahrstufe über die Eingabeeinheit 2 einstellt. Es ist jedoch auch vorstellbar, dass anhand vorab eingestellter Angaben die Recheneinheit 3 automatisch festlegt, ob die eingestellt Fahrstufe beibehalten wird.

Mit diesem Verfahren ist somit bereits vor dem eigentlichen Start/Abfahren bzw. Lastwechsel der Anlage eine Angabe zum erwarteten Lebensdauerverbrauch bei Einhaltung der Anfahr/Abfahr- oder Lastwechselzeit durchführbar. Außer zur Vorausbestimmung des Lebensdauerverbrauchs kann das Verfahren alternativ oder zusätzlich auch zur Vorausbestimmung des erwarteten Brennstoffverbrauch und/oder der erwarteten Leistungsabgabe während des Lastwechsels herangezogen werden. Damit ist eine wesentlich bessere Prognose als auch Regelung des Anlagenbetriebs möglich.

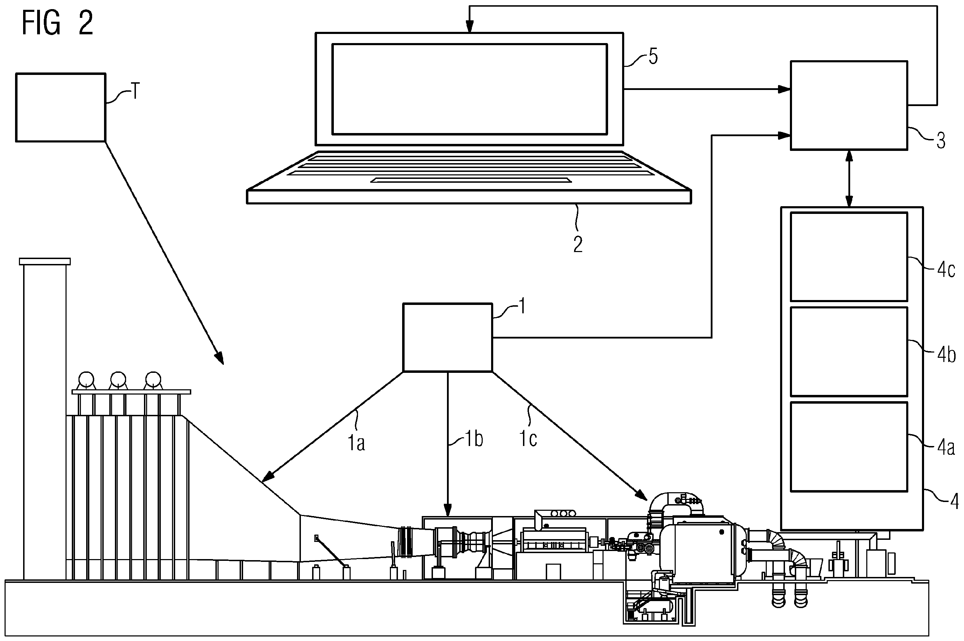

FIG 2 zeigt das Verfahren in einer GuD-Anlage T. Das Automatisierungssystem 1 greift hier die aktuelle, den Zustand der Energieerzeugungsanlage charakterisierende Größen der Anlage ab. Diese sind im wesentlichen der Abhitzedampferzeuger 1a, die Gasturbine 1b und die Dampfturbine 1c und gegebenenfalls der Kessel (hier nicht dargestellt). Dabei berücksichtigt das Verfahren, dass beispielsweise die Gasturbine 1b bei Abschalten der Anlage wesentlich schneller abkühlt als dies bei dem Kessel oder der Dampfturbine 1c der Fall ist. Über eine Eingabeeinheit 2 beispielsweise einem Rechner, wird die Fahrstufe eingestellt. Die Daten werden an eine Berechnungseinheit 3 weitergeleitet. Die Berechnungseinheit 3 berechnet die erwartete Anfahr/Abfahr- bzw. die Lastwechselzeit der gesamten GuD-Anlage und spaltet diese Zeiten auch auf die Gasturbine 1b und die Dampfturbine 1c bzw. Abhitzedampferzeuger 1a und Kessel auf. In dem Lebensdauer-Überwachungssystem wird der aktuelle Gasturbinen-Lebensdauerverbrauch 4b und der Dampfturbinen-Lebensdauerverbrauch 4c bzw. Abhitzedampferzeuger-Lebensdauerverbrauch 4a abgegriffen. Mit den in der Recheneinheit 3 berechneten Ergebnissen wird gleichzeitig der erwartete Lebensdauerverbrauch für die einzelnen Bauteile bei durchführen des Lastwechselvorgangs bei eingestellter Fahrstufe berechnet. Das Ergebnis, der erwartete Lebensdauerverbrauch der einzelnen Bauteile, kann nun auf der Ausgabeeinheit 5 dargestellt werden. Anschließend kann anhand des Ergebnisses die aktuell eingestellte Fahrstufe beibehalten oder verworfen werden.

Mit dem neuen System erhält der Kraftwerksbetreiber bzw. der Kraftwerksfahrer die Möglichkeit die Anlagenfahrweise aktiv an die aktuellen Anforderungen an das Kraftwerk anpassen zu können. Solche Anforderungen ergeben sich z.B. aus Leistungsanforderungen des Lastverteilers, Brennstoffkosten oder Stromerlöspreise. Weiter hat der Betreiber bzw. der Kraftwerksfahrer die Möglichkeit aktiv in den Lebensdauerverbrauch beim Betrieb der Anlage einzugreifen und so eventuell fällige Wartungsintervalle zu steuern und mit seiner Kraftwerkseinsatzplanung abzustimmen.

Durch das Verfahren ergibt sich die Möglichkeit bereits vor dem Anfahr/Abfahrvorgang bzw. Lastwechsel des Kraftwerkes den erwarteten Vorgang, auf Basis des aktuellen Anlagenzustandes, zu simulieren und hieraus Informationen über relevante Prozessgrößen wie z.B. des erwarteten Lebensdauerverbrauches einzelner Bauteile und/oder des erwarteten Brennstoffverbrauches und/oder der Leistungsabgabe während des Lastwechsels zu erhalten. Diese Informationen ermöglichen wiederum z.B. eine monetäre Bewertung des Anfahr/Abfahrvorgangs oder des Lastwechselvorgangs.

Augrund der erhöhten Flexibilität der Anlage wird weiterhin beispielsweise die Wettbewerbsfähigkeit fossil befeuerter Kraftwerke wie z.B. einer GuD-Anlage gesteigert, da Anlagen angeboten werden können, die beispielsweise einen Betrieb, genau auf das jeweilige Anforderungsprofil des Kunden zugeschnitten, ermöglichen.

## Patentansprüche

1. Verfahren zur Vorausbestimmung des Lebensdauerverbrauchs einzelner Bauteile einer fossil befeuerten Energieerzeugungsanlage im Hinblick auf einen durchzuführenden Lastwechselvorgang, **dadurch gekennzeichnet, dass**
- vor dem Lastwechselvorgang aktuelle, den Zustand der Energieerzeugungsanlage charakterisierende Größen bestimmt werden, und dass
- eine den Lastwechselvorgang realisierende Fahrstufe der Energieerzeugungsanlage vorab eingestellt wird, und wobei
- mittels der Fahrstufe und den charakterisierenden Größen die Lastwechselzeit berechnet wird, und dass
- ein prognostizierter Lebensdauerverbrauch für wenigstens einen Teil der einzelnen Bauteile für die eingestellte Fahrstufe berechnet wird.

2. Verfahren nach Anspruch 1,
**dadurch gekennzeichnet, dass** anstelle der eingestellten Fahrstufe eine gewünschte Lastwechselzeit und eine gewünschte Zielzeit eingegeben werden.

3. Verfahren nach Anspruch 1 oder 2,
**dadurch gekennzeichnet, dass** die charakterisierende Größen die aktuellen Bauteiltemperaturen umfassen.

4. Verfahren nach einem der vorhergehenden Ansprüche,
**dadurch gekennzeichnet, dass** die charakterisierende Größen die aktuellen Systemdrücke umfassen.

5. Verfahren nach einem der vorhergehenden Ansprüche,
**dadurch gekennzeichnet, dass** durch den Lastwechsel ein Anfahrvorgang durchgeführt wird.

6. Verfahren nach einem der vorhergehenden Ansprüche,
**dadurch gekennzeichnet, dass** durch den Lastwechsel ein Abfahrvorgang durchgeführt wird.

7. Verfahren nach einem der vorhergehenden Ansprüche,
**dadurch gekennzeichnet, dass** die Berechnung der Lastwechselzeit mittels Simulation durchgeführt wird.

8. Verfahren nach einen der vorhergehenden Ansprüche,
**dadurch gekennzeichnet, dass** durch die Berechnung des erwarteten Lebensdauerverbrauchs eine Steuerung des Lebensdauerverbrauchs einzelner Bauteile durchgeführt wird

9. Verfahren nach einem der vorhergehenden Ansprüche,
**dadurch gekennzeichnet, dass** das verfahren bei einer Energieerzeugungsanlage umfassend einer Gasturbine (1b) und/oder Abhitzedampferzeuger (1a) und/oder Dampfturbine (1c) und/oder Kessel und/oder Generator und/oder Transformator angewendet wird.

10. Verfahren nach einem der vorhergehenden Ansprüche,
**dadurch gekennzeichnet, dass** das Verfahren in einer Gasturbinen, Dampfturbinen- oder GuD-Anlage (T) angewendet wird.

11. verfahren nach einem der Ansprüche 1 bis 10,
**dadurch gekennzeichnet, dass** über eine Eingabe des gewünschten Lebensdauerverbrauchs der einzelnen Bauteile nach Lastwechsel die Fahrstufe daraufhin abgestimmt und die erwartete Lastwechselzeit berechnet wird.

12. Vorrichtung zur Vorausbestimmung des Lebensdauerverbrauchs einzelner Bauteile einer fossil befeuerten Energieerzeugungsanlage im Hinblick auf einen durchzuführenden Lastwechselvorgang umfassend eines Automatisierungssystems (1), einer Rechnereinheit (3) und ein Lebensdauer-Überwachungssystem (4),
**dadurch gekennzeichnet, dass**
- das Automatisierungssystem (1) für die Bestimmung aktueller, den Zustand der Energieerzeugungsanlage charakterisierende Größen vorgesehen ist,
- das Automatisierungssystem (1) für eine Vorab-Eingabe einer gewünschten Fahrstufe vorgesehen ist,
- das Automatisierungssystem (1) zum Datenaustausch mit der Rechnereinheit (3) und die Rechnereinheit (3) zum Datenaustausch mit dem Lebensdauer-Überwachungssystem (4) verbunden sind, so dass eine Berechnung eines prognostizierten Lebensdauerverbrauchs für wenigstens einen Teil der einzelnen Bauteile mittels der Fahrstufe und den charakterisierenden Größen die Lastwechselzeit für die eingestellte Fahrstufe erzielt ist.

13. Vorrichtung nach Anspruch 12,
**dadurch gekennzeichnet, dass** die charakterisierende Größen wenigstens eine Bauteiltemperatur eines Teils der Bauteile in einer fossil befeuerten umfasst

14. Vorrichtung nach Anspruch 12 oder 13,
**dadurch gekennzeichnet, dass** die charakterisierenden Größen wenigstens einen Systemdruck der auftretenden Drücke in einer fossil befeuerten Energieerzeugungsanlage umfasst.

15. Vorrichtung nach einem der Ansprüche 12 bis 14,
**dadurch gekennzeichnet, dass** die Eingabe der gewünschten Fahrstufe manuell mittels eines Bedieners oder automatisiert vorgesehen ist.

16. Vorrichtung nach einem der Ansprüche 12 bis 15,
**dadurch gekennzeichnet, dass** das Rechensystem (3) die Berechnung der Anfahrzeit der fossil befeuerten Energieerzeugungsanlage umfasst.

17. Vorrichtung nach einem der Ansprüche 12 bis 16,
**dadurch gekennzeichnet, dass** das Rechensystem (3) die Berechnung der Abfahrzeit der fossil befeuerten Energieerzeugungsanlage umfasst.

18. Vorrichtung nach einem der Ansprüche 12 bis 17,
**dadurch gekennzeichnet, dass** das Rechensystem (3) eine Simulationseinheit umfasst.

19. Vorrichtung nach einem der Ansprüche 12 bis 18,
**dadurch gekennzeichnet, dass** eine Eingabeeinheit (2) zum Datenaustausch mit der Rechnereinheit (3) vorgesehen ist.

20. Vorrichtung nach einem der Ansprüche 12 bis 19,
**dadurch gekennzeichnet, dass** eine Ausgabeeinheit (5) zum Datenaustausch mit der Rechnereinheit (3) vorgesehen ist.

21. Vorrichtung nach einem der Ansprüche 12 bis 20,
**dadurch gekennzeichnet, dass** eine Ausgabeeinheit (5) zum Datenaustausch mit dem Lebensdauer-Überwachungssystem (4) vorgesehen ist.

22. Vorrichtung nach einem der Ansprüche 12 bis 21,
**dadurch gekennzeichnet, dass** die einzelnen Bauteile der Energieerzeugungsanlage Bauteile einer Gasturbine (1b) und/oder eines Abhitzedampferzeuger (1a) und/oder einer Dampfturbine (1c) und/oder eines Kessels und/oder eines Generators und/oder eines Transformator sind.

23. Energieerzeugungsanlage mit einer Vorrichtung nach einem der Ansprüche 12 bis 22.

24. Energieerzeugungsanlage nach Anspruch 23 in einer Ausgestaltung als Gasturbinen-, oder, Dampfturbinen- oder GuD-Anlage (T).

## Claims

1. Method for prior determination of the life consumption of individual components in a fossil-fuelled power generating installation, with respect to a load cycling process to be carried out,
**characterized in that**
- actual variables which characterize the state of the power generating installation are determined before the load cycling process, and **in that**
- a driving gear of the power generating installation which creates the load cycling process is set in advance, and with
- the load cycle time being calculated by means of the driving gear and the characterizing variables, and **in that**
- a predicted life consumption is calculated for at least some of the individual components for the selected driving gear.

2. Method according to Claim 1,
**characterized in that**
a desired load cycle time and a desired intended time are entered rather than the selected driving gear.

3. Method according to Claim 1 or 2,
**characterized in that**
the characterizing variables comprise the actual component temperatures.

4. Method according to one of the preceding claims,
**characterized in that**
the characterizing variables comprise the actual system pressures.

5. Method according to one of the preceding claims,
**characterized in that**
a starting process is carried out by the load cycle.

6. Method according to one of the preceding claims,
**characterized in that**
a stopping process is carried out by the load cycle.

7. Method according to one of the preceding claims,
**characterized in that**
the load cycle time is calculated by means of simulation.

8. Method according to one of the preceding claims,
**characterized in that**
the life consumption of individual components is controlled by calculating the expected life consumption.

9. Method according to one of the preceding claims,
**characterized in that**
the method is used for a power generating installation comprising a gas turbine (1b) and/or a waste-heat steam generator (1a), and/or a steam turbine (1c) and/or a boiler and/or a generator and/or a transformer.

10. Method according to one of the preceding claims,
**characterized in that**
the method is used in a gas turbine, a steam turbine or a gas and steam turbine installation (T).

11. Method according to one of Claims 1 to 10,
**characterized in that**
by inputting the desired life consumption of the individual components on the basis of the load cycle the driving gear is matched thereto and the expected load cycle time is calculated.

12. Apparatus for prior determination of the life consumption of individual components in a fossil-fuelled power generating installation, with respect to a load cycling process to be carried out, comprising an automation system (1), a computer unit (3) and a life monitoring system (4),
**characterized in that**
- the automation system (1) is intended for determining actual variables which characterize the state of the power generating installation,
- the automation system (1) is intended for prior input of a desired driving gear,
- the automation system (1) is connected to the computer unit (3) for data interchange, and the computer unit (3) is connected to the life monitoring system (4) for data interchange, such that a predicted life consumption is calculated for at least some of the individual components by means of the driving gear and the characterizing variables the load cycle time for the selected driving gear.

13. Apparatus according to Claim 12, **characterized in that**
the characterizing variables comprise at least one component temperature of some of the components in a fossil-fuelled power generating installation.

14. Apparatus according to Claim 12 or 13,
**characterized in that**
the characterizing variables comprise at least one system pressure of the pressures which occur in a fossil-fuelled power generating installation.

15. Apparatus according to one of Claims 12 to 14,
**characterized in that**
the desired driving gear is input manually, by means of an operator, or automatically.

16. Apparatus according to one of Claims 12 to 15,
**characterized in that**
the computation system (3) comprises calculation of the starting time of the fossil-fuelled power generating installation.

17. Apparatus according to one of Claims 12 to 16,
**characterized in that**
the computation system (3) comprises calculation of the stopping time of the fossil-fuelled power generating installation.

18. Apparatus according to one of Claims 12 to 17
**characterized in that**
the computation system (3) comprises a simulation unit.

19. Apparatus according to one of Claims 12 to 8,
**characterized in that**
an input unit (2) is provided for interchanging data with the computer unit (3).

20. Apparatus according to one of Claims 12 to 19,
**characterized in that**
an output unit (5) is provided for interchanging data with the computer unit (3).

21. Apparatus according to one of Claims 12 to 20,
**characterized in that**
an output unit (5) is provided for interchanging data with the life monitoring system (4).

22. Apparatus according to one of Claims 12 to 21,
**characterized in that**
the individual components on the power generating installation are a gas turbine (1b) and/or a waste-heat steam generator (1a) and/or a steam turbine (1c) and/or a boiler and/or a generator and/or a transformer.

23. Power generating installation having an apparatus according to one of Claims 12 to 22.

24. Power generating installation according to Claim 23, configured as a gas turbine, steam turbine or gas and steam turbine installation (T).

## Revendications

1. Procédé pour déterminer à l'avance la réduction de la durée de vie de divers composants d'une installation de production d'énergie à alimentation en matière fossile au vue d'une opération de changement de charge à effectuer, **caractérisé en ce que**
- avant l'opération de changement de charge on détermine des grandeurs caractérisant l'état de l'installation de production d'énergie et **en ce que**
- on établit au préalable un stade de marche réalisant l'opération de changement de charge de l'installation de production d'énergie et dans lequel
- au moyen du stade de marche et des grandeurs caractéristiques on calcule le temps de changement de charge et **en ce que**
- on calcule une réduction pronostiquée de la durée de vie pour au moins une partie des composants individuels pour le stade de marche établi.

2. Procédé suivant la revendication 1,
**caractérisé en ce qu'**au lieu du stade de marche établi on entre un temps de changement de charge souhaité et un temps cible souhaité.

3. Procédé suivant la revendication 1 ou 2,
**caractérisé en ce que** les grandeurs caractéristiques comprennent les températures instantanées des composants.

4. Procédé suivant l'une des revendications précédentes,
**caractérisé en ce que** les grandeurs caractéristiques comprennent les pressions instantanées du système.

5. Procédé suivant l'une des revendications précédentes,
**caractérisé en ce que** l'on effectue une opération de démarrage par le changement de charge.

6. Procédé suivant l'une des revendications précédentes,
**caractérisé en ce que** l'on effectue une opération d'arrêt par le changement de charge.

7. Procédé suivant l'une des revendications précédentes,
**caractérisé en ce que** l'on effectue le calcul du temps de changement de charge au moyen d'une simulation.

8. Procédé suivant l'une des revendications précédentes,
**caractérisé en ce que** l'on effectue, par le calcul de la réduction de durée de vie escomptée, une commande de la réduction de durée de vie de divers composants.

9. Procédé suivant l'une des revendications précédentes,
**caractérisé en ce que** l'on applique le procédé à une installation de production d'énergie comprenant une turbine (1b) à gaz et/ou un générateur de vapeur (1a) à récupération de la chaleur perdue et/ou une turbine (1c) à vapeur et/ou une chaudière et/ou une génératrice et/ou un transformateur.

10. Procédé suivant l'une des revendications précédentes,
**caractérisé en ce que** l'on applique le procédé dans une turbine à gaz, dans une installation (T) de turbine à vapeur ou dans une centrale à turbine à gaz à cycle combiné.

11. Procédé suivant l'une des revendications 1 à 10,
**caractérisé en ce que** l'on détermine, par une entrée de la réduction de la durée de vie souhaitée des divers composants après le changement de charge, le stade de marche et on calcule la durée de changement de charge escomptée.

12. Installation pour déterminer à l'avance la réduction de durée de vie de divers composants d'une installation de production d'énergie à alimentation fossile en vue d'une opération de changement de charge à effectuer, comprenant un système (1) d'automatisation, une unité (3) d'ordinateur et un système (4) de contrôle de la durée de vie,
**caractérisée en ce que**
- le système (1) d'automatisation est prévu pour la détermination de grandeurs instantanées caractérisant en l'état de l'installation de production d'énergie,
- le système (1) d'automatisation est prévu pour une entrée au préalable d'un stade de marche souhaité,
- le système (1) d'automatisation est, pour l'échange de données, relié à l'unité (3) d'ordinateur et l'unité (3) d'ordinateur est, pour l'échange de données, reliée au système (4) de contrôle de la durée de vie, de manière à ce qu'un calcul d'une réduction pronostiquée de la durée de vie, pour au moins une partie des divers composants, au moyen du stade de marche et des grandeurs caractéristiques, permette d'atteindre la durée de changement de charge pour le stade de marche établi.

13. Installation suivant la revendication 12,
**caractérisée en ce que** les grandeurs caractéristiques comprennent au moins une température d'une partie des composant d'une installation de production d'énergie à alimentation en combustible fossile.

14. Installation suivant la revendication 12 ou 13,
**caractérisée en ce que** les grandeurs caractéristiques comprennent au moins une pression de système, des pressions apparaissant dans une installation de production d'énergie à alimentation en combustible fossile.

15. Installation suivant l'une des revendications 12 à 14,
**caractérisée en ce que** l'entrée du stade de marche souhaité est prévue manuellement au moyen d'un opérateur ou de façon automatisée.

16. Installation suivant l'une des revendications 12 à 15,
**caractérisée en ce que** le système (3) d'ordinateur comprend le calcul du temps de démarrage de l'installation de production d'énergie alimentée en combustible fossile.

17. Installation suivant l'une des revendications 12 à 16,
**caractérisée en ce que** le système (3) d'ordinateur comprend le calcul du temps d'arrêt de l'installation de production d'énergie alimentée en combustible fossile.

18. Installation suivant l'une des revendications 12 à 17,
**caractérisée en ce que** le système (3) d'ordinateur comprend une unité de simulation.

19. Installation suivant l'une des revendications 12 à 18,
**caractérisée en ce qu'**il est prévu une unité (2) d'entrée pour l'échange de données avec l'unité (3) d'ordinateur.

20. Installation suivant l'une des revendications 12 à 19,
**caractérisée en ce qu'**il est prévu une unité (5) de sortie pour l'échange de données avec l'unité (3) d'ordinateur.

21. Installation suivant l'une des revendications 12 à 20,
**caractérisée en ce qu'**il est prévu une unité (5) de sortie pour l'échange de données avec le système (4) de contrôle de la durée de vie.

22. Installation suivant l'une des revendications 12 à 21,
**caractérisée en ce que** les divers éléments constitutifs de l'installation de production d'énergie sont des éléments constitutifs d'une turbine (1b) à gaz et/ou d'un générateur (1a) de vapeur à récupération de la chaleur perdue et/ou d'une turbine (1c) à vapeur et/ou d'une chaudière et/ou d'une génératrice et/ou d'un transformateur.

23. Installation de production d'énergie, ayant une installation suivant l'une des revendications 12 à 22.

24. Installation de production d'énergie suivant la revendication 23, dans une conformation en installation (T) de turbine à gaz ou de turbine à vapeur ou dans une centrale à turbine à gaz à cycles combinés.
